**Europäisches Patentamt**

**European Patent Office**

**Office européen des brevets**

(11) Veröffentlichungsnummer: **0 149 113**
**A2**

(12) **EUROPÄISCHE PATENTANMELDUNG**

(21) Anmeldenummer: **84114958.6**

(22) Anmeldetag: **08.12.84**

(51) Int. Cl.⁴: **A 01 D 34/42**

(30) Priorität: **13.12.83 DE 3344987**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Ing. Alfred Schmidt GmbH**

**D-7822 St. Blasien(DE)**

(71) Anmelder: **Flughafen Frankfurt/Main AG**

**D-6000 Frankfurt (Main) 75(DE)**

(72) Erfinder: **Doyen, Hans-Henning**
**Erlenbergstrasse 8**
**D-6730 Neustadt-Königsbach(DE)**

(72) Erfinder: **Hühn, Edgar**
**Zille Ring 49**
**D-6082 Mörfelden-Walldorf(DE)**

(74) Vertreter: **Grättinger, Günter**
**Wittelsbacher Strasse 5 Postfach 16 49**
**D-8130 Starnberg(DE)**

(54) **Mähgerät, insbesondere für Grasflächen auf Flughäfen.**

(57) Ein Mähgerät, welches sich besonders zum Mähen von Grasflächen auf Flughäfen eignet, weist die folgenden Merkmale auf:

a) ein Gehäuse (2) des Mähgeräts ist nach vorne mindestens teilweise und nach unten vollständig offen,

b) im Inneren des Gehäuses (2) ist ein Schlegelmähwerk (4) mit einer horizontalen quer zur Fahrtrichtung verlaufenden Welle (5) angeordnet, an welcher, über deren Umfangsfläche verteilt, gegliederte Schneidelemente (6) axial unverrückbar angelenkt sind;

c) das Schlegelmähwerk (4) rotiert, bezogen auf den oberen Durchgang, entgegen der Mährichtung (p);

d) die Drehzahl des Schlegelmähwerks (4) ist größer als 1500 U/min;

e) im Inneren des Gehäuses (2) ist vor und oberhalb der Rotationsachse des Schlegelmähwerks (4) eine zu dieser parallele Messerleiste (11) befestigt;

f) die Messerleiste (11) ist in Rotationsrichtung (f) 20 bis 60 Winkelgrade hinter einer horizontalen Ebene durch die Rotationsachse angeordnet und

g) die Messerleiste (11) besitzt ein der Hüllfläche des rotierenden Schlegelmähwerks (4) entsprechendes, bis auf einen geringen Abstand an dieser heranreichendes Profil.

Fig.1

Croydon Printing Company Ltd.

## Mähgerät, insbesondere für Grasflächen auf Flughäfen

Die Erfindung betrifft ein Mähgerät, insbesondere für Grasflächen auf Flughäfen. Bei derartigen Mähgeräten stand bisher die Erzielung einer möglichst großen Flächenleistung im Vordergrund. Die Entwicklung geht daher auf Geräte mit großer Schnittbreite und hoher Fahrgeschwindigkeit.

Nach neueren Untersuchungen über Biotope auf Flughäfen wird zur Verhinderung des für den Flugverkehr gefährlichen Vogelschlags eine hohe Grasnarbe von 20 bis 50 cm, bevorzugt etwa 30 cm Schnitthöhe gefordert. Dabei wird von der Erkenntnis ausgegangen, daß eine derart hohe Grasnarbe das Landen der Vögel verhindert; auch sind Greifvögel dann nicht mehr in der Lage, auf dem Boden laufende Mäuse aus der Höhe zu erkennen.

Zum Erzielen Dekapitierung des Grases in der geforderten Höhe von 30 cm und mehr sind die bekannten Mähgeräte nicht geeignet. Während übliche Spindelmähwerke,

-2-

bei denen rotorfeste Schneidmesser um eine horizontale
Achse rotieren, Schnitthöhen bis zu 18 cm zulassen,
beträgt die maximale Schnitthöhe der bekannten Sichelmähwerke, bei denen rotorfeste Schneidmesser um eine
vertikale Achse rotieren, nur etwa 10 cm.

Schließlich sind noch sog. Schlegelmähwerke bekannt;
dabei handelt es sich um Mähwerke mit um eine horizontale Achse rotierenden, beweglich aufgehängten Schlagmesseren welche selbst stärkstes Mähgut, wei Dornengestrüpp, stark zerkleineren. Schlegelmähwerke werden
daher bevorzugt auf Flächen mit hohem Fremdkörperanteil, also mehr in der Forst- und Kommunalwirtschaft
als in der Landwirtschaft eingesetzt. Zum Dekapitieren
von Gras mit einer Schnitthöhe von über 10 cm sind
die üblichen Schlegelmähwerke ungeeignet, da sich die
Grasnarbe bei dieser Schnitthöhe unter dem Mähwerk
umlegt.

Bei einem bekannten Mehrzweckgerät (Deutsche Offenlegungsschrift 24 36 308) insbesondere zum Aufnehmen,
Zerkleinern und Verteilen von auf Schwaden liegendem
Stroh ist in einem nach vorne und unten offenen Gehäuse
eine um eine horizontale Achse rotierende Mähtrommel
mit daran schwenkbar angelenkten Häckselmesseren in
Art eines Schlegelmähwerks vorgesehen. Das Schlegelmähwerk ist schaufelradartig ausgebildet und erzeugt bei einer Drehzahl von 2150 Umdrehungen pro Minute einen starken Sog, wodurch das Mähgut nach oben gesaugt, mittels eines an der Gehäuseoberseite angeordneten Gegenmessers gehäckselt und als Häckselgut durch einen im oberen Gehäuseteil vorgesehenen Ausblasschacht ausgeblasen wird. Das Häckselgut ist hier verhältnismäßig grob und langstielig. Zum Mähen von Gras insbesondere mit größerer Schnitthöhe ist das bekannte Mähgerät ungeeignet, da die Grashalme ausweichen, so daß die verbleibende Grasnarbe ungleichmäßig geschnitten wird.

Demgegenüber liegt der vorliegenden Erfindung die Aufgabe zugrunde, ein Mähgerät mit hoher Flächenleistung zu schaffen, welches zum Mähen von Gras mit Schnitthöhen bis zu 30 cm oder darüber geeignet ist und dabei eine sauber geschnittene Grasnarbe und ein besonders kurzgehäckseltes Schnittgut erzeugt.

Ein derartiges Mähgerät umfaßt die in Anspruch 1 aufgeführten Merkmale a) bis g). Es entspricht seinen grundsätzlichen Aufbau nach einem Schlegelmähwerk. Erst im Zusammenwirken mit einer Messerleiste im vorderen Gehäusebereich, welche ein der Hüllfläche des Schlegelmähwerks entsprechendes, bis auf einen geringen Abstand an diese heranreichendes Profil besitzt, gelingt es, das zunächst langhalmig geschnittene Gras in einem engen, durch die Messerleiste begrenzten

-4-

Stauraum im Inneren des Gehäuses besonders fein zu häckseln, so daß das Häckselgut durch die stehengebliebene Grasnarbe auf den Boden fällt und dort vermulcht. Infolge des engen Stauraums bei hoher Drehzahl des Mähwerks wird erreicht, daß das abgeschnittene Mähgut mehrmals von den Schneidelmenten des Schlegelmähwerks getroffen wird, so daß es erst in fein gehäckselter Form in die verbleibende Grasnarbe zurückfällt. Während nach der bisher bekannten Mähtechnik zur Pflege der Grünflächen auf Flughäfen etwa 5 bis 8 Mähgänge pro Jahr erforderlich waren, reduziert sich der Mähaufwand bei Verwirklichung der Empfehlung der genannten Untersuchung, welche eine Grasnarbe in Hähe von 30 cm vorschlägt, auf zwei Schnitte pro Jahr. Außerdem kann der zu Beginn des Winters übliche Räumschnitt mit Abfuhr des Mähguts entfallen. Im Sommer kann die Grasnarbe eine Höhe bis zu etwa 90 cm erreichen; man mäht dann in einem Schnitt bis auf eine verbleibende Grashöhe von 25 bis 30 cm. Wesentlich ist dabei, daß das Schnittgut durch das Mähgerät fein gehäckselt wird, wobei die erzielte Häcksellänge von etwa 5 cm ideal ist. Selbstverständlich kann das vorgeschlagene Mähgerät anstatt Langgras -auch Kurzgrasflächen bearbeiten.

-5-

Im Rahmen der Erfindung beträgt die bevorzugte Drehzahl des Schlegelmähwerks ca. 2.400 Umdrehungen pro Minute. Durch eine variable Einstellung der Drehzahl kann diese an die gewünschte Schnitthöhe der verbleibenden Grasnarbe angepaßt werden, wobei die Drehzahl etwa proportional mit der Schnitthöhe zunimmt.

Die Anordnung der Messerleiste ist wesentlich für die Bemessung des Stauraums zwischen Schlegelmähwerk und Gehäuse auf der Vorderseite des Schlegelmähwerks. In diesem Stauraum wird das zunächst langhalmige Schnittgut gefangen, dort mehrfach durch die Schneidelemente des Schlegelmähwerks erfaßt und auf diese Weise sehr kurz gehäckselt. Das gehäckselte Gut fällt dannn sowohl auf der Vorderseite als auch auf der Hinterseite des Schlegelmähwerks zu Boden.

Um eine besonders vorteilhafte Stauwirkung der Messerleiste zu erzielen, ist vorgesehen, daß sie ein gezahntes Profil aufweist, und daß die Endglieder der Schneidelmente des Schlegelmähwerks eine in die Lücken des Zahnprofils der Messerleiste eingreifende Hüllfläche beschreiben.

Auf weitere zweckmäßige Ausgestaltungen der Schneidelemente des Schlegelmähwerks einerseits und der Messerleiste andererseits beziehen sich die Unteransprüche 4 bis 5.

Zur weiteren Herabsetzung der Häcksellänge kann es zweckmäßig sein, daß parallel zur Messerleiste im oberen Bereich des Gehäuses noch eine oder mehrere gehäusefeste Häckselschienen in Rotationsrichtung nach der Messerleiste angeordnet sind. Derartige Häckselschienen können im Rahmen einer zweckmäßigen Weiterbildung radial zur Rotationsachse ausgerichtet , verzahnt oder unverzahnt sein; verglichen mit der Messerleiste sind sie von der Hüllfläche des rotierenden Schlegelmähwerks weiter entfernt.

Zum Erzielen großer Schnittbreiten können, wie an sich bekannt, durch Heck- und Frontanbau an einem Trägerfahrzeug mehrere getrennte Mäheinheiten zu einer Mäheinrichtung kombiniert werden. Weiter unten wird ein Antriebssystem für mehrere Mäheinheiten unter Verwendung von Mähgeräten der vorgeschlagenen Art beschrieben, bei welchem eine erste Mäheinheit wenigstens von der Breite des Trägerfahrzeugs an dessen Front angebaut ist, und wobei weitere Mäheinheiten paarzahlig am Heck des Trägerfahrzeugs angeschlossen sind, welche bezüglich der frontseitigen Mäheinheit seitlich versetzt sind, derart, daß bei mehreren Paaren heckseitiger Mäheinheiten diese zur Seite hin gestaffelt angeordnet sind, und wobei wenigstens für den Antrieb der heckseitigen Mäheinheiten ein von Fahrzeugmotor unabhängiger Aufbaumotor auf dem Trägerfahrzeug vorgesehen ist.

Ein derartiges Antriebssystem ergibt bei einer frontseitigen und zwei Paaren heckseitiger Mäheinheiten eine Arbeitsbreite von ca. 9 m. Damit läßt sich bei einer Fahrgeschwindigkeit von 8 bis 10 km/h eine Flächenleistung von 8 bis 10 ha pro Stunde erzielen, wobei die Antriebsleistung von Aufbaumotor und Fahrmotor zusammen mit etwa 400 KW auszulegen ist.

Im folgenden werden ein Ausführungsbeipiel eines erfindungsgemäßen Mähgeräts und ein geeignetes Antriebssystem , welches eine Kombination aus mehreren derartigen Mähgeräten ist, anhand der Zeichnung erläutert. Es zeigt

Fig. 1    einen senkrecht zur Rotationsachse ge-führten Vertikalschnitt durch ein Mähge-rät, in schematischer Darstellung,

Fig. 2    eine teilweise Ansicht gem. Pfeil II der Fig. 1 auf Messerleiste und Schlegelmähwerk und

Fig. 3    ein Antriebssystem in schematischer Darstellung mit einer Mehrzahl von Mähein-heiten.

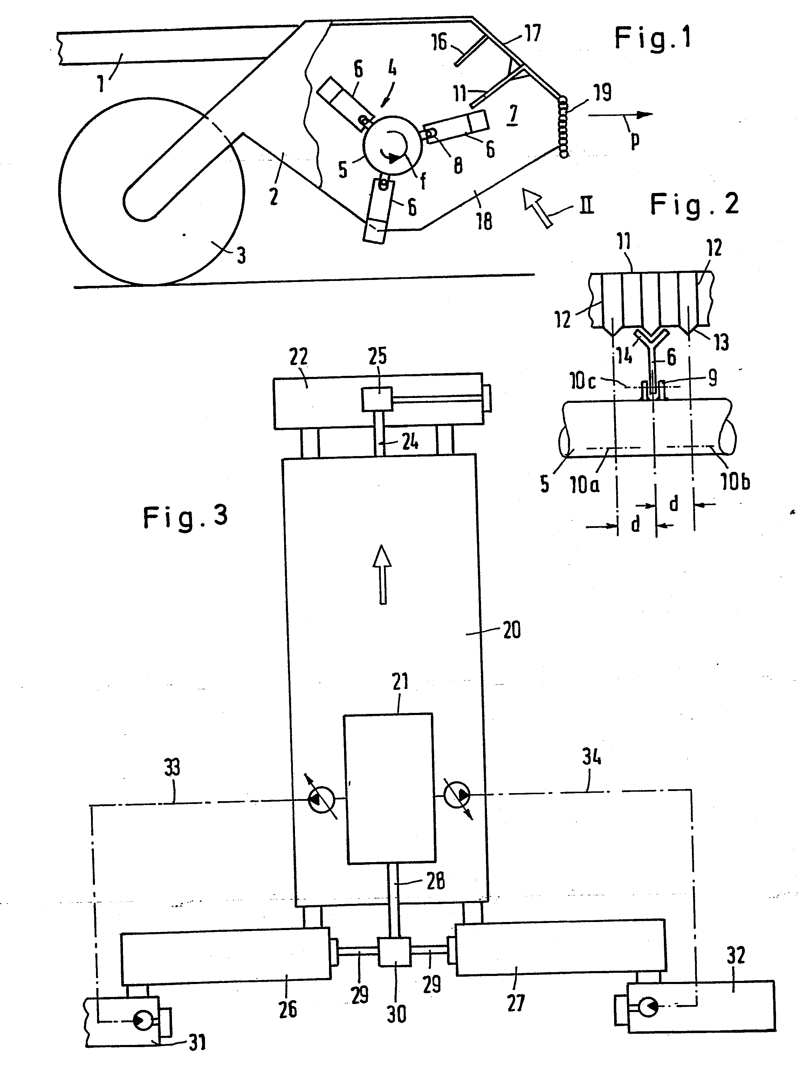

Gem. Fig. 1 ist ein Vertikalschnitt durch ein Mähgerät gezeigt, welches mittels horizontaler Streben 1 an der Frontseite eines nicht gezeigten Trägerfahrzeugs angebracht ist. Angetrieben wird das Mähgerät beispielsweise mittels einer ebensowenig dargestellten frontseitigen Zapfwelle des Trägerfahrzeugs, welche mit dem Getriebe des Mähgeräts verbunden ist. Das Mähgerät umfaßt ein Gehäuse 2, welches auf gegenüberliegenden Seiten mittels Nachlaufrädern 3 auf dem Boden geführt ist. In dem aufgeschnittenen Gehäuse 2 des Mähgeräts erkennt man das eigentliche Mähwerk, welches in Art eines Schlegelmähwerks 4 ausgebildet ist. Dieses umfaßt eine quer zur Fahrtrichtung verlaufende, in Richtung des Pfeils f rotierende Welle 5, an welcher Schneidelemente 6 über den Umfang verteilt angeordnet sind. Das Ausführungsbeispiel zeigt drei Reihen von Schneidelementen 6, welche über die gesamte Länge der Welle 5 des Schlegelmähwerks 4 aufeinanderfolgend um 120° versetzt auf der Welle 5 angelenkt sind.

Aus Fig. 2 wird deutlich, daß jedes Schneidelement 6 aus einem Y-förmigen Glied besteht, welches mit einem Ende um einen Bolzen 8 schwenkbar zwischen radial auf der Welle 5 aufgeschweißten Ohren 9 befestigt ist; durch diese Befestigungsart ist jedes Schneidelement axial festgelegt, so daß es lediglich innerhalb einer radialen Ebene um einen Bolzen 8 verschwenkbar ist.

Gem. Fig. 2 sind die Bolzenachsen 10a,10b,10c dreier nebeneinander angeordneter Schneidelemente 6 eingezeichnet, wobei z. B. die linke Bolzenachse 10a auf der sichtbaren Vorderseite, die rechte Bolzenachse 10b auf der verdeckten Rückseite der Welle 5 anzunehmen ist. Der Axialabstand zweier in axialer Richtung aufeinanderfolgender Schneidelemente 6 ist in Fig. 2 mit "d" angegeben.

Eine im Inneren des Gehäuses 2 befestigte Messerleiste 11 besitzt Zähne 12, deren spitz zulaufende Enden 13 zwischen zwei miteinander einen Winkel bildende Schenkelstücke 14 an den Enden der Y-förmigen Schneidelemente 6 eingreifen. Auf diese Weise ist das Profil der Messerleiste 11 mit dem Profil der Hüllfläche des Schlegelmähwerks verzahnt. Diese Verzahnung bewirkt den oberen bzw. vorderen Abschluß eines Stauraums 7 unterhalb der Messerleiste 11. Das gemähte, zunächst noch langstielige Gras sammelt sich in diesem Stauraum 7, wo es so lange von der Messerleiste 11 zurückgehalten wird, bis es durch die mehrfache Einwirkung der Schneidelemente 6 im Bereich des Stauraums 7 zu kurzen Halmen gehäckselt ist. Das gehäckselte Stückgut fällt dann zu beiden Seiten der Welle 5 aus dem Gehäuse nach unten. Zur zusätzlichen Verwirbelung und sicheren Erfassung des gesamten langstieligen Mähguts ist hinter der Messerleiste 11 noch eine Häckselschine 16 an der Innenseite der vorderen Gehäusewand 17 befestigt.

Das Gehäuse 2 ist seitlich geschlossen. In der Darstellung gem. Fig. 1 ist die eine Seitenwand aufgeschnitten, so daß nur die gegenüberliegende Seitenwand 18 erkennbar ist. Nach unten ist das Gehäuse 2 offen, ebenso im unteren Bereich nach vorne. Im Bereich der vorderen Mähöffnung ist ein Kettenvorhang 19 vorgesehen ist. Mit Pfeil p ist die Mährichtung des Mähgeräts angegeben.

Fig. 3 zeigt in der Draufsicht das Schema eines Antriebssystems. An einem Trägerfahrzeug 20 mit Aufbaumotor 21 ist frontseitig eine Mäheinheit 22 aufgehängt, welche etwas breiter ist als das Trägerfahrzeug 20. Diese Mäheinheit 22 wird über eine frontseitige Zapfwelle 24 des Trägerfahrzeugs über ein Umlenkgetriebe 25 angetrieben. Heckseitig sind an dem Trägerfahrzeug 20 zwei Paare von weiteren Mäheinheiten befestigt und in seitlicher Richtung zueinander gestaffelt angeordnet. Ein erstes Paar mit zwei direkt am Fahrzeugheck befestigten Mäheinheiten 26,27 ist über eine Zapfwelle 28 des Aufbaumotors 21 über eine Antriebswelle 29 eines gemeinsamen Getriebes 30 angetrieben. Diese beiden Mäheinheiten 26,27 entsprechen in ihrer jeweiligen Schnittbreite etwa der frontseitigen Mäheinheit 22. Das äußere Paar der heckseitigen Mäheinheiten besteht aus zwei kleineren Mäheinheiten 31,32 welche jeweils am Gehäuse der vorauslaufenden heckseitigen Mäheinheiten 26, 27 aufgehängt sind. Die beiden äußeren heckseitigen Mäheinheiten 31, 22 werden über die Hydraulikkreise 33, 34 des Aufbaumotors 21 angetrieben.

Hinsichtlich der Schnittbreite kann beispielhaft davon ausgegangen werden, daß die drei größeren Mäheinheiten 22, 26, 27 jeweils eine Schnittbreite von 2,50 m, die kleineren heckseitigen Mäheinheiten 31, 32 jeweils eine Schnittbreite von 1,75 m haben. Die gesamten Schnittbreite des Systems beträgt also etwa 9 m.

0149113

- 1 -

Patentansprüche

1. Mähgerät, insbesondere für Grasflächen auf Flughäfen, welches die folgende Merkmale umfaßt:

a) ein Gehäuse (2) des Mähgeräts ist nach vorne
mindestens teilweise und nach unten vollständig
offen,

b) im Inneren des Gehäuses (2) ist ein Schlegelmähwerk (4) mit einer horizontalen quer zur Fahrtrichtung verlaufenden Welle (5) angeordnet, an
welcher, über deren Umfangsfläche verteilt, gegliederte Schneidelemente (6) axial unverrückbar
angelenkt sind;

c) das Schlegelmähwerk (4) rotiert, bezogen auf
den oberen Durchgang, entgegen der Mährichtung
(p);

d) die Drehzahl des Schlegelmähwerks (4) ist größer
als 1500 U/min;

es ist dadurch gekennzeichnet,

e) daß im Inneren des Gehäuses (2) vor und oberhalb
der Rotationsachse des Schlegelmähwerks (4) eine
zu dieser parallele Messerleiste (11) befestigt
ist;

f) daß die Messerleiste (11) in Rotationsrichtung
(f) 20 bis 60 Winkelgrade hinter einer horizontalen Ebene durch die Rotationsachse angeordnet
ist,

g) daß die Messerleiste (11) ein der Hüllfläche
des rotierenden Schlegelmähwerks (4) entsprechendes, bis auf einen geringen Abstand an dieser
heranreichendes Profil besitzt.

2. Mähgerät nach Anspruch 1,
dadurch gekennzeichnet,
daß die Messerleiste (11) ein gezahntes Profil aufweist, und daß die Endglieder der Schneidelmente
(6) des Schlegelmähwerks (4) eine in die Lücken
des Zahnprofils der Messerleiste (11) eingreifende
Hüllfläche beschreiben.

3. Mähgerät nach Anspruch 2,
dadurch gekennzeichnet,
daß jeweils ein Schneidelement (6) je Zahn (12)
vorgesehen ist.

4. Mähgerät nach Anspruch 2 oder 3,
dadurch gekennzeichnet,
daß alternierend mindestens zwei verschiedene Zahnlängen vorgesehen sind.

5. Mähgerät nach einem der Ansprüche 1 bis 4,
dadurch gekennzeichnet,
daß die äußeren Glieder der Schneidelemente (6)
des Schlegelmähwerks (4) jeweils an ihrem freien
Ende in zwei Schenkelstücke (14) auslaufen, die
während der Rotation wenigstens teilweise in zwei
benachbarte Zahnlücken der Verzahnung der Messerleiste (11) eingreifen.

6. Mähgerät nach einem der Ansprüche 1 bis 5,
   dadurch gekennzeichnet,
   daß parallel zur Messerleiste (11) im oberen Bereich
   des Gehäuses (6) noch eine oder mehrere gehäusefeste
   Häckselschienen (16) in Rotationsrichtung (f) nach
   der Messerleiste (11) angeordnet sind.

1/1

Fig.1

Fig.2

Fig.3